# EUROPÄISCHE PATENTSCHRIFT

(11) **EP 3 807 129 B1**
(45) Veröffentlichungstag und Bekanntmachung des Hinweises auf die Patenterteilung: **13.04.2022**
(21) Anmeldenummer: 19748707.7
(22) Anmeldetag: 09.07.2019
(51) Int. Cl.: B60R 5/04

(54) **GEPÄCKABTEIL FÜR EIN FAHRZEUG**
LUGGAGE COMPARTMENT FOR A VEHICLE
COMPARTIMENT À BAGAGES POUR UN VÉHICULE

(30) Priorität: 10.08.2018 DE 102018213508
(43) Veröffentlichungstag der Anmeldung: 21.04.2021
(73) Patentinhaber: Siemens Mobility GmbH, 81739 München (DE)
(72) Erfinder: ESCH, Christoph, 40225 Düsseldorf (DE)
(86) Internationale Anmeldenummer: PCT/EP2019/068405
(87) Internationale Veröffentlichungsnummer: WO 2020/030365

(56) Entgegenhaltungen:
- EP-A2- 1 225 093
- DE-A1- 10 323 605
- DE-A1-102017 206 905
- DE-U- 1 957 525

## Beschreibung

Die Erfindung bezieht sich auf ein Gepäckabteil für ein Fahrzeug zur Personenbeförderung, mit einem Verschluss für eine Zugangsöffnung des Gepäckabteils.

Bei Gepäckabteilen insbesondere für Fahrzeuge zur Personenbeförderung besteht die Anforderung, einerseits das Gepäckabteil zuverlässig verschließen zu können, andererseits jedoch auch eine Einsehbarkeit des Gepäckabteils zu ermöglichen. Zudem soll der vorgesehene Verschluss für die Zugangsöffnung des Gepäckabteils einen geeigneten Feuerwiderstand aufweisen.

Zu diesem Zweck ist es denkbar, zum Verschließen der Zugangsöffnung des Gepäckabteils ein Tor oder eine Tür mit Fenster vorzusehen. Bei dieser Ausführung für einen Verschluss der Zugangsöffnung des Gepäckabteils wird es als nachteilig empfunden, dass das vorgesehene Tor auch in geöffneter Stellung einen gewissen Bauraum einnimmt, sodass ein Be- und Entladen des Gepäckabteils eingeschränkt wird.

Aus der EP 1 225 093 A2 ist ein Gepäckabteil für ein Fahrzeug zur Personenbeförderung bekannt, mit einem Verschluss für eine Zugangsöffnung des Gepäckabteils, wobei der Verschluss rolloartig von einer im oberen Bereich der Zugangsöffnung des Gepäckabteils angeordneten Rolle in einer Schließrichtung des Verschlusses abrollbar ist und sich jeweils in Querrichtung des Gepäckabteils erstreckende Lamellen sowie zwei einander gegenüberliegende, jeweils zur Führung der Lamellen ausgebildete und angeordnete flexible U-Profile aufweist, wobei die am weitesten in Schließrichtung des Verschlusses liegende Lamelle seitlich an beiden U-Profilen fixiert ist, während die übrigen Lamellen in den U-Profilen gleitend geführt sind, die Lamellen zur Einnahme einer Verschlussstellung einzeln mittels eines sich in der Schließrichtung erstreckenden Halteseils in Abständen zu unmittelbar benachbarten Lamellen gehalten sind. Des Weiteren ist aus der DE 103 23 605 A1 eine lamellenartige Schutzvorrichtung für den Laderaum eines Kraftfahrzeugs und aus der DE 19 57 525 U eine Lamellenjalousie für Fenster von Kraftfahrzeugen bekannt.

Ausgehend hiervon liegt der Erfindung die Aufgabe zugrunde, ein Gepäckabteil der eingangs genannten Art derart weiterzuentwickeln, das unter Beibehaltung der Einsehbarkeit und des Feuerwiderstands des Verschlusses ein Be- und Entladen des Gepäckabteils vereinfacht wird.

Diese Aufgabe wird gelöst durch ein Gepäckabteil mit den Merkmalen des Anspruchs 1.

Danach ist ein Gepäckabteil für ein Fahrzeug zur Personenbeförderung vorgesehen, mit einem Verschluss für eine Zugangsöffnung des Gepäckabteils, der Verschluss rolloartig von einer im oberen Bereich der Zugangsöffnung des Gepäckabteils angeordneten Rolle in einer Schließrichtung des Verschlusses abrollbar ist und sich jeweils in Querrichtung des Gepäckabteils erstreckende Lamellen sowie zwei einander gegenüberliegende, jeweils zur Führung der Lamellen ausgebildete und angeordnete flexible U-Profile aufweist, wobei die am weitesten in Schließrichtung des Verschlusses liegende Lamelle seitlich an beiden U-Profilen fixiert ist, während die übrigen Lamellen in den U-Profilen gleitend geführt sind, die Lamellen zur Einnahme einer Verschlussstellung einzeln mittels eines sich in der Schließrichtung erstreckenden Halteseils in Abständen zu unmittelbar benachbarten Lamellen gehalten sind und das Halteseil in der Verschlussstellung der Lamellen zum Verschließen der Zugangsöffnung des Gepäckabteils mittels einer Verriegelungseinrichtung an der Rolle verriegelbar ist und zur Einnahme einer Brandschutzstellung derart entriegelbar ist, dass die Lamellen unter Einwirkung der Gravitationskraft eine geschlossene Formation bilden.

Ein Gepäckabteil mit einem Verschluss der vorbeschriebenen Art zeichnet sich dadurch aus, dass der gesamte Verschluss, d.h. die Lamellen gemeinsam mit den seitlich vorgesehenen U-Profilen auf eine Rolle im oberen Bereich der Zugangsöffnung des Gepäckabteils aufrollbar ist, sodass eine gesamte Breite der Zugangsöffnung für Be- und Entladevorgänge verfügbar ist, die somit vereinfacht werden.

Eine Länge des Halteseils ist dabei vorzugsweise so bemessen, dass sich zwischen den einzelnen Lamellen ausreichend große Spalte ergeben, sodass eine Einsehbarkeit des Gepäckabteils gegeben ist.

Ein gewünschter Feuerwiderstand des Verschlusses ist dadurch gegeben, dass bei einer Entriegelung des Halteseils die Einwirkung der Gravitationskraft dazu führt, dass sämtliche gleitend geführten Lamellen nach unten rutschen, sodass sich insgesamt eine geschlossene Formation ergibt.

Vorzugsweise weisen wenigstens die gleitend geführten Lamellen übereinstimmende Abmessungen auf und die (vertikalen) Abstände zwischen benachbarten Lamellen sind gleich groß und entsprechen wenigstens einer halben Breite einer einzelnen Lamelle. Dies stellt einen geeigneten Kompromiss zwischen einer Einsehbarkeit des Gepäckabteils und einem geeigneten Verschluss desselben dar.

Das Halteseil verläuft bevorzugt entlang einem der U-Profile und ist an zugeordneten Enden der Lamellen fixiert. In dieser Weise sind gewünschte Abstände zwischen unmittelbar benachbarten Lamellen geeignet festgelegt.

Eine Entriegelung der Verriegelungseinrichtung für das Halteseil kann mittels einer Branddetektionseinrichtung auslösbar sein. Diese Branddetektionseinrichtung kann beispielsweise als Brandmelder vorliegen, der innerhalb des Gepäckabteils angeordnet ist und automatisch eine Entriegelung der Verriegelungseinrichtung bewirkt, wenn ein Brand festgestellt wird. Alternativ ist es auch möglich, eine Temperaturmessung innerhalb des Gepäckabteils zum Auslösen einer Entriegelung des Halteseils zu verwenden. Dazu wäre eine geeignete Auslösetemperatur festzulegen.

An dem vorauseilenden Rand des Verschlusses kann ein Griff zur Betätigung des Verschlusses und/oder eine Schließeinrichtung zum Arretieren des voreilenden Randes des Verschlusses vorgesehen sein. Der Griff und/oder die Schließeinrichtung können beispielsweise an der am Weitesten in Schließrichtung liegenden Lamelle angebracht sein. Es ist jedoch auch möglich, dass diese Lamelle ebenfalls in ein U-Profil eingebettet ist, welches dann einen voreilenden Rand des Verschlusses bildet, und an diesem U-Profil der Griff und/oder die Schlie-βeinrichtung vorgesehen sind.

Ein Ausführungsbeispiel der Erfindung wird nachfolgend unter Bezugnahme auf die Zeichnung noch näher erläutert. Es zeigen:
- Figur 1: eine Seitenansicht eines Verschlusses für eine Zugangsöffnung eines Gepäckabteils,
- Figur 2: eine Querschnittsansicht in der Ebene II-II von Figur 1 und
- Figur 3: eine Querschnittsansicht einer Einzelheit des Verschlusses von Figur 1 in der Ebene III-III von Figur 1.

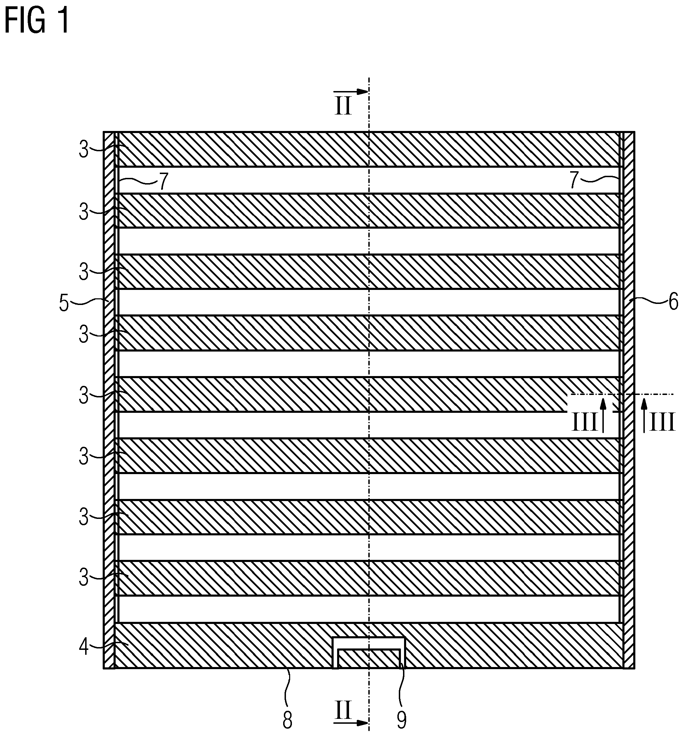

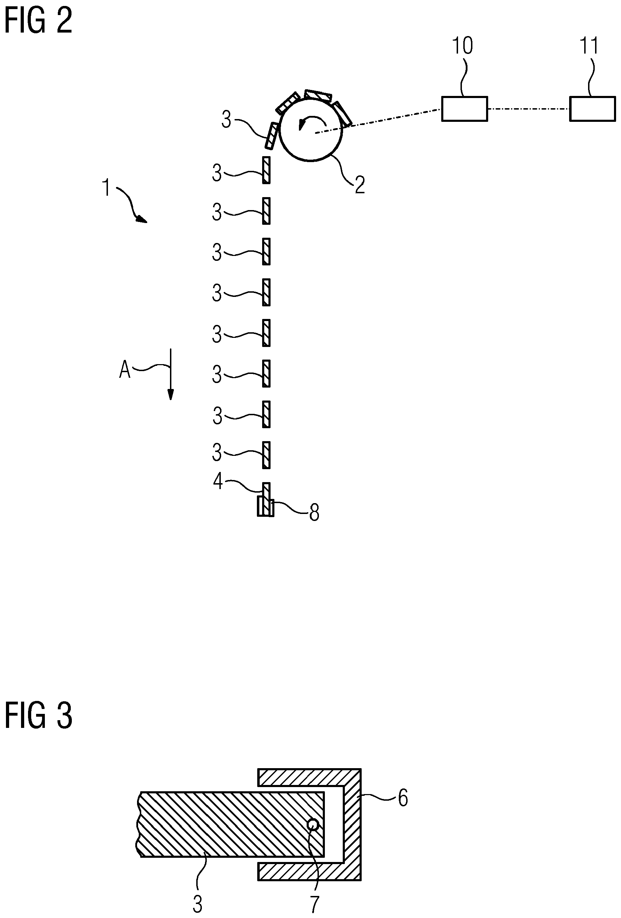

Figur 1 zeigt die Vorderseite eines Gepäckabteils für ein Fahrzeug zur Personenbeförderung, wie ein Schienenfahrzeug oder ein Bus, wobei die Vorderseite des Gepäckabteils von einem Verschluss 1 zum Verschließen einer Zugangsöffnung des Gepäckabteils gebildet ist. Über die Zugangsöffnung kann das Gepäckabteil be- und entladen werden. Wie aus Figur 2 hervorgeht, ist der Verschluss 1 von einer Rolle 2, die im oberen Bereich der Zugangsöffnung des Gepäckabteils angeordnet und montiert ist, in einer Schließrichtung A des Verschlusses 1 abrollbar. Der Verschluss 1 weist eine Mehrzahl sich jeweils in Querrichtung des Gepäckabteils erstreckende Lamellen 3, 4 auf. Die Lamellen 3 sind in seitlichen, flexiblen U-Profilen 5, 6 geführt. Dabei sind die U-Profile 5, 6 derart flexibel, dass sich der Verschluss 1 insgesamt auf die Rolle 2 aufrollen lässt, um die Zugangsöffnung des Gepäckabteils vollständig freizugeben.

Die am weitesten in Schließrichtung A des Verschlusses 1 liegende Lamelle 4 ist seitlich an den beiden U-Profilen 5, 6 fixiert und bildet somit beim Abrollen des Verschlusses 1 von der Rolle einen voreilenden Rand 8 des Verschlusses 1. Dem gegenüber sind die übrigen Lamellen 3 in den U-Profilen 5, 6 gleitend geführt, wie insbesondere aus der Schnittdarstellung von Figur 3 hervorgeht.

Die Lamellen 3, 4 liegen in einer dem typischen Benutzungsfall entsprechenden Verschlussstellung in vertikalen Abständen übereinander. Dies verschafft die Möglichkeit der Einsehbarkeit des Gepäckabteils durch sich ergebende quer laufende Spalte zwischen unmittelbar benachbarten Lamellen 3, 4.

Eine Positionierung der Lamellen 3 in der Verschlussstellung des Verschlusses 1 erfolgt über ein Halteseil 7. Im vorliegenden Ausführungsbeispiel verläuft das Halteseil 7 dem U-Profil 6 unmittelbar benachbart und ist jeweils an zugeordneten Enden der Lamellen 3, 4 fixiert, und zwar in den gewünschten Abständen zwischen den Lamellen 3,4. Das Halteseil 7 ist mit seinem oberen Ende zudem an der Rolle 2 fixiert. Damit bestimmt das Halteseil 7 jeweils die vertikale Position der einzelnen Lamellen 3, 4, so dass sich die gewünschten Querspalte zwischen benachbarten Lamellen 3, 4 in der Verschlussstellung ergeben. Auch dem U-Profil 5 benachbart ist ein Halteseil 7 vorgesehen, das funktionsgleich zu dem Halteseil 7 ist, das vorstehend in Zusammensicht mit dem U-Profil 6 erläutert ist.

Die Verriegelung des Halteseils 7 an der Rolle 2 ist lösbar ausgestaltet. Insbesondere ist eine Auslösbarkeit einer Entriegelung der zum Fixieren des Halteseils 7 an der Rolle 2 eingesetzten Verriegelungseinrichtung mittels einer Branddetektionseinrichtung vorgesehen. Sobald das Halteseil 7 nicht länger an der Rolle 2 fixiert ist, gleiten die Lamellen 3 aufgrund der Einwirkung der Gravitationskraft entlang der U-Profile 5, 6 nach unten, so dass der Verschluss 1 keinerlei Spalte zwischen unmittelbar benachbarten Lamellen 3, 4 aufweist, vielmehr eine geschlossene Anordnung der Lamellen 3, 4 zeigt. Die damit eingenommene Brandschutzstellung des Verschlusses 1 ist geeignet, eine Ausbreitung eines Brandes von dem Gepäckabteil aus in einen Fahrgastinnenraum eines Fahrzeugs, zu verhindern oder wenigstens erheblich zu erschweren.

Wie aus den Figuren 1 und 2 hervorgeht, sind die Abstände zwischen unmittelbar benachbarten Lamellen 3, 4 gleich groß. Diese Abstände entsprechen wenigstens einer halben Breite einer einzelnen Lamelle 3, wobei sämtliche Lamellen 3, 4 in dem vorgestellten Ausführungsbeispiel übereinstimmende Abmessungen aufweisen.

An dem voreilenden Rand 8 des Verschlusses 1 ist ein Griff 9 zur Betätigung des Verschlusses 1 und ggf. auch eine Schließeinrichtung zum Arretieren des voreilenden Randes 8 des Verschlusses 1 an beispielsweise einem Boden vorgesehen.

Wie aus Figur 2 hervorgeht, wird die Verriegelung der Halteseile 7 mittels einer Auslöseeinheit 10 gelöst, sodass sich die Lamellen 3 aufgrund der Einwirkung der Schwerkraft zur Ausbildung einer geschlossenen Wandung nach unten bewegen. Die Auslöseeinheit 10 wiederum ist gekoppelt mit einem Rauch-Feuermelder 11, der zur Detektion eines Brandherdes innerhalb des Gepäckabteils dient. Bei Detektion eines Brandherdes wird die Auslöseeinheit 10 angesteuert, welche wiederum eine beispielsweise mechanisch wirkende Verriegelung für die Halteseile 7 löst.

## Patentansprüche

1. Gepäckabteil für ein Fahrzeug zur Personenbeförderung, mit einem Verschluss (1) für eine Zugangsöffnung des Gepäckabteils,
wobei
der Verschluss (1) rolloartig von einer im oberen Bereich der Zugangsöffnung des Gepäckabteils angeordneten Rolle (2) in einer Schließrichtung des Verschlusses (1) abrollbar ist und sich jeweils in Querrichtung des Gepäckabteils erstreckende Lamellen (3, 4) sowie zwei einander gegenüberliegende, jeweils zur Führung der Lamellen (3, 4) ausgebildete und angeordnete flexible U-Profile (5, 6) aufweist, wobei die am weitesten in Schließrichtung (A) des Verschlusses (1) liegende Lamelle (4) seitlich an beiden U-Profilen (5, 6) fixiert ist, während die übrigen Lamellen (3) in den U-Profilen (5, 6) gleitend geführt sind,
die Lamellen (3, 4) zur Einnahme einer Verschlussstellung einzeln mittels eines sich in der Schließrichtung erstreckenden Halteseils (7) in Abständen zu unmittelbar benachbarten Lamellen (3, 4) gehalten sind und
das Halteseil (7) in der Verschlussstellung der Lamellen (3, 4) zum Verschließen der Zugangsöffnung des Gepäckabteils mittels einer Verriegelungseinrichtung an der Rolle (2) verriegelbar ist und zur Einnahme einer Brandschutzstellung derart entriegelbar ist, dass die Lamellen (3, 4) unter Einwirkung der Gravitationskraft eine geschlossene Formation bilden.

2. Gepäckabteil nach Anspruch 1,
wobei
wenigstens die gleitend geführten Lamellen (3) übereinstimmende Abmessungen aufweisen und die Abstände zwischen unmittelbar benachbarten Lamellen (3, 4) gleich groß sind und wenigstens einer halben Breite einer einzelnen Lamelle (3, 4) entsprechen.

3. Gepäckabteil nach einem der Ansprüche 1 oder 2,
wobei
das Halteseil (7) entlang einem der U-Profile (5, 6) verläuft und an zugeordneten Enden der Lamellen (3, 4) fixiert ist.

4. Gepäckabteil nach einem der Ansprüche 1 bis 3,
wobei
eine Entriegelung der Verriegelungseinrichtung für das Halteseil (7) mittels einer Branddetektionseinrichtung auslösbar ist.

5. Gepäckabteil nach einem der Ansprüche 1 bis 4,
wobei
an dem voreilenden Rand (8) des Verschlusses (1) ein Griff (9) zur Betätigung des Verschlusses (1) und/oder eine Schlie-βeinrichtung zum Arretieren des voreilenden Randes (8) des Verschlusses (1) vorgesehen sind.

## Claims

1. Luggage compartment for a passenger transport vehicle, having a shutter (1) for an access opening of the luggage compartment,
wherein
the shutter (1) is unrollable, in the manner of a roller shutter, in a closing direction of the shutter (1) from a roller (2) arranged in the upper region of the access opening of the luggage compartment and has slats (3, 4) that each extend in a transverse direction of the luggage compartment and two mutually opposite flexible U-profiles (5, 6) that are respectively arranged and designed to guide the slats (3, 4), wherein
the slat (4) that is located furthest in the closing direction (A) of the shutter (1) is fixed laterally to both U-profiles (5, 6), while the other slats (3) are slidably guided in the U-profiles (5, 6),
the slats (3, 4), in order to take up a closed position, are held individually at spacings from immediately adjacent slats (3, 4) by means of a holding rope (7) extending in the closing direction, and
the holding rope (7), in the closed position of the slats (3, 4), is able to be locked to the roller (2) by means of a locking device in order to close the access opening of the luggage compartment, and, in order to take up a fire protection position, is unlockable such that the slats (3, 4) form a closed formation under the effect of gravity.

2. Luggage compartment according to Claim 1,
wherein
at least the slidably guided slats (3) have matching dimensions and the spacings between immediately adjacent slats (3, 4) are the same size and correspond at least to half a width of an individual slat (3, 4).

3. Luggage compartment according to either of Claims 1 and 2,
wherein
the holding rope (7) extends along one of the U-profiles (5, 6) and is fixed at associated ends of the slats (3, 4).

4. Luggage compartment according to one of Claims 1 to 3, wherein
unlocking of the locking device for the holding rope (7) is able to be triggered by means of a fire detection device.

5. Luggage compartment according to one of Claims 1 to 4, wherein
a handle (9) for actuating the shutter (1) and/or a closing device for locking the leading edge (8) of the shutter (1) are provided at the leading edge (8) of the shutter (1).

## Revendications

1. Compartiment à bagages d'un véhicule de transport de passagers, comprenant une fermeture (1) d'une ouverture d'accès au compartiment à bagages,
dans lequel
la fermeture (1) peut être déroulée dans une direction de fermeture de la fermeture (1) à la manière d'un store d'un rouleau (2) disposé dans la partie supérieure de l'ouverture d'accès du compartiment à bagages et a des lamelles (3,4) s'étendant chacune dans une direction transversale du compartiment à bagages, ainsi que deux profilés (5, 6) en U souples se faisant face, constitués et disposés chacun pour guider les lamelles (3, 4), dans lequel
la lamelle (4), se trouvant le plus loin dans la direction (A) de fermeture de la fermeture (1), est immobilisée latéralement sur les deux profilés (5, 6) en U, tandis que les autres lamelles (3) sont guidées à coulissement dans les profilés (5, 6) en U,
les lamelles (3, 4) sont, pour prendre une position de fermeture, maintenues individuellement au moyen d'une corde (7) de maintien, s'étendant dans la direction de fermeture, à des distances des lamelles (3, 4) immédiatement voisines et
la corde (7) de maintien peut, dans la position de fermeture des lamelles (3, 4), être verrouillée sur le rouleau (2) au moyen d'un dispositif de verrouillage pour la fermeture de l'ouverture d'accès du compartiment à bagages et, pour prendre une position de protection vis-à-vis de l'incendie, être déverrouillée de manière à ce que les lamelles (3, 4) forment sous l'effet de la force de gravité une conformation fermée.

2. Compartiment à bagages suivant la revendication 1,
dans lequel
au moins les lamelles (3) guidées à coulissement ont des dimensions qui coïncident et les distances entre des lamelles (3, 4) immédiatement voisines sont égales et correspondent au moins à une demi largeur d'une lamelle (3, 4) individuelle.

3. Compartiment à bagages suivant l'une des revendications 1 ou 2,
dans lequel
la corde (7) de maintien s'étend le long de l'un des profilés (5, 6)) en U et est immobilisée sur les extrémités associées des lamelles (3, 4).

4. Compartiment à bagages suivant l'une des revendications 1 à 3,
dans lequel
un déverrouillage du dispositif de verrouillage de la corde (7) de maintien peut être déclenché au moyen d'un dispositif de détection d'incendie.

5. Compartiment à bagages suivant l'une des revendications 1 à 4,
dans lequel
au bord (8) en avant de la fermeture (1) sont prévus une poignée (9) d'actionnement de la fermeture (1) et/ou un dispositif de fermeture pour arrêter le bord (8) en avant de la fermeture (1).
